# EUROPEAN PATENT SPECIFICATION

(11) **EP 1 708 874 B1**
(45) Date of publication and mention of the grant of the patent: **03.03.2010**
(21) Application number: 05705891.9
(22) Date of filing: 18.01.2005
(51) Int. Cl.: B32B 3/30

(54) **CARD SHEET WITH ELECTRON-BEAM CURABLE POLYMERS AS BREAKABLE LAYERS IN PRE-CUT SUBSTRATES**
KARTENBOGEN MIT ELEKTRONENSTRAHLAUSHÄRTBAREN POLYMEREN ALS AUFBRECHBARE SCHICHTEN IN VORGESCHNITTENEN SUBSTRATEN
FEUILLE POUR CARTE COMPRENANT DES POLYMERES DURCISSABLES PAR FAISCEAU ELECTRONIQUE FORMANT DES COUCHES DECHIRABLES DANS DES SUBSTRATS PREDECOUPES

(30) Priority: 26.01.2004 US 539184 P
(43) Date of publication of application: 11.10.2006
(73) Proprietor: AVERY DENNISON CORPORATION, Pasadena, CA 91103 (US)
(72) Inventor: BILODEAU, Wayne, L., Mentor, OH 44060 (US)
(74) Representative: Hallam, Arnold Vincent
(86) International application number: PCT/US2005/001660
(87) International publication number: WO 2005/072945

(56) References cited:
- US-A- 5 993 928
- US-A1- 2003 148 056

## Description

### TECHNICAL FIELD

The present invention relates to sheets of calling or business cards, photograph cards, post cards and the like, methods of making them and methods of using them, from which individual units can be broken out from the sheets.

### BACKGROUND

The design of calling or business cards by simply printing them with commercially available laser or inkjet printers is of interest. Small size printable media, such as calling or business cards, cannot be individually printed with conventional laser or inkjet printers due to their small format. For this reason, for printing calling cards by means of a laser printer or an inkjet printer, card sheets are usually initially used, from which the calling cards are separated after having been printed, leaving a residual "matrix" of the card sheet. In these card sheets a supporting structure is provided for the cards and a variety of embodiments are known for such card sheets and carriers. In these card sheets and carriers, a problem which has continued to occur is the residue left at the edge of the cards after they are separated from the card sheets. If this problem is avoided by cutting completely through the card sheet prior to printing, then a problem of retaining the nascent cards on a support structure prior to printing remains.

Thus, a need remains for card stock which is pre-scored or pre-cut and is printable with a laser printer or copier, and which breaks cleanly to yield a card having clean edges free of dangling fibers or other unsightly remnants, and which does not require additional support structures to retain the cards prior to printing and separation from the card sheet.

### SUMMARY

In accordance with one embodiment, the present invention relates to card sheets, from which cards can be separated by simply breaking them out from the sheet, with the broken-out cards having smooth edges, and no additional structure is required to retain the cards on the card sheet prior to printing and separation of individual cards from the card sheet.

In one embodiment, the present invention relates to a card sheet including a top material layer having pre-cut weakened lines extending partially but not completely through the top material layer, the top material layer having a front surface and a back surface; and an electron beam cured polymer layer applied as a pre-polymer composition to the back side of the top material layer, wherein at least a portion of the pre-polymer composition diffuses into the top material layer to a depth which, upon electron beam curing to form the electron beam cured polymer, renders the top material layer breakable along the weakened lines. The weakened lines define one or more sub-sheets.

In another embodiment, the present invention relates to a method of making a card sheet, including providing a top material layer having a front side and a back side; cutting partially through the top material layer to form weakened lines defining subdivided sheets on the card sheet; applying an electron beam curable pre-polymer composition to the back side of the top material layer, the composition having a viscosity effective to allow at least a portion of the electron beam curable composition to diffuse into the back side of the top material layer to a depth at or near the weakened lines; and electron beam curing the pre-polymer.

In one embodiment, the front and the reverse sides of the card sheet feel substantially the same to the touch. In one embodiment, the card sheet includes a top material having punched or die cut lines, the front of which is printable and on the reverse of which comprises at least one electron beam (EB) cured polymer layer. The electron beam cured polymer layer can comprise a stress-at-break in the range from about ten to about thirty MPa and an elongation at break in the range from about one to about 300%, or in another embodiment, from about ten to about 300% or in another embodiment, from about ten to about 120%.

The electron beam cured polymer of the present invention and the mechanical properties it imparts to the card stock when it diffuses into the card stock and is then cured allow the card stock to be die cut (or otherwise cut) on the top only, without needing to be pre-cut completely through the card stock. In one embodiment, an electron beam curable pre-polymer composition is applied to the card sheet, diffused into the card sheet, and then cured. The electron beam cured polymer layer and the portion thereof diffused into the card stock material provides for a clean snap-break, in one embodiment with only a single folding action. In other words, in this embodiment, the user does not have to fold it back and forth to break it. As used herein, "snap break" means that the carrier yields during bending to a point, less than fully folded, where the carrier suddenly breaks along the pre-cut weakened lines. The single folding action, for example, can be between about forty-five and about one hundred and sixty-five degrees.

Other advantages of the present invention will become more apparent to those persons having ordinary skill in the art to which the present invention pertains from the foregoing description taken together with the accompanying drawings.

### BRIEF DESCRIPTION OF THE DRAWINGS

Fig. 1 is a top plan view of a card sheet in accordance with an embodiment of the present invention;
Fig. 2 is a perspective view of a printer (or copier) showing a stack of card sheets of Fig. 1 being inserted therein and printed;
Fig. 3 is an enlarged cross-sectional view of a portion of the card sheet of Fig. 1 taken on line 3-3;
Fig. 4 is an enlarged cross-sectional view of another embodiment of a card sheet similar to that shown in Fig. 3;
Fig. 5 is an enlarged cross-sectional view of still another embodiment of a card sheet similar to that shown in Fig. 3;
Figs. 6a and 6b are enlarged cross-sectional views of two additional embodiments of a card sheet in accordance with the present invention;
Figs. 7a and 7b are enlarged cross-sectional views of two further embodiments of a card sheet in accordance with the present invention;
Figs. 8a and 8b show the snap-break mechanism of a card sheet in accordance with an embodiment of the invention similar to that shown in Fig. 5;

It should be appreciated that for simplicity and clarity of illustration, elements shown in the Figures have not necessarily been drawn to scale. For example, the dimensions of some of the elements may be exaggerated relative to each other for clarity. Further, where considered appropriate, reference numerals have been repeated among the Figures to indicate corresponding elements.

It should be appreciated that the process steps and structures described below do not form a complete process flow for preparing particular types of cards and card sheet stock or for printing such cards and card sheet stock. The present invention can be practiced in conjunction with evaluation techniques, processing methods and fabrication techniques currently used in the art, and only so much of the commonly practiced process steps and known devices and systems are included as are necessary for an understanding of the present invention.

### DETAILED DESCRIPTION

In one embodiment, the card sheet of the present invention includes a top material layer, having a front side and a back side, and pre-cut weakened lines extending partially but not completely through the layer. In one embodiment, the front side of the top material layer is printable. In one embodiment, the card sheet includes an electron beam cured polymer layer which has been applied to the back side of the top material layer as an electron beam curable pre-polymer composition. The electron beam curable pre-polymer composition diffuses into the top material layer to a desired depth, and, when cured by application of an electron beam, renders the top material layer breakable along the weakened lines. In one embodiment, the depth of diffusion is sufficient to provide a clean, residue-free edge when individual cards are subsequently separated or broken from the card sheet.

As used herein, the term "electron beam (or EB) curable pre-polymer" refers to the uncured electron beam curable pre-polymer material, and the term "electron beam (or EB) cured polymer" refers to the electron beam-cured polymer material. These terms may be used interchangeably, and it will be apparent from the context which is referred to. It should be understood that the electron beam curable pre-polymer is applied to the substrate in as an electron beam curable pre-polymer composition in which the pre-polymer is in an uncured state and is subsequently cured, prior to separation of individual cards or units from the card sheet and use by the ultimate user or consumer. The term "electron beam curable polymer layer" refers to the layer in which the EB curable pre-polymer has diffused, whether or not it has been cured. That is, the term "electron beam curable polymer layer" refers to the layer of the card sheet containing either the EB curable pre-polymer or the EB cured polymer.

In one embodiment, the electron beam curable pre-polymer composition is applied directly to the top material layer without an intervening "hold-out" layer. In many prior art applications, radiation curable resins cannot be used on porous substrates unless a hold-out layer is provided since the resins will bleed into the substrate and good film development cannot be obtained. In addition, due to the bleeding of the resin into the porous substrate, it was not possible to get a good UV cure since the fibers of the substrate block the UV radiation. In the present invention, this former problem is used to advantageously obtain an inexpensive card sheet, from which individual cards can be separated by simply breaking them out from the sheet, with the broken-out cards having smooth edges. This is attained by allowing the electron beam curable pre-polymer composition to bleed or diffuse into the card stock, after which it is electron beam cured. Thus, the desired product is obtained. The electron beam can be applied at sufficient energy to penetrate deeply into the card stock, thereby causing curing of the uncured electron beam curable pre-polymer diffused therein.

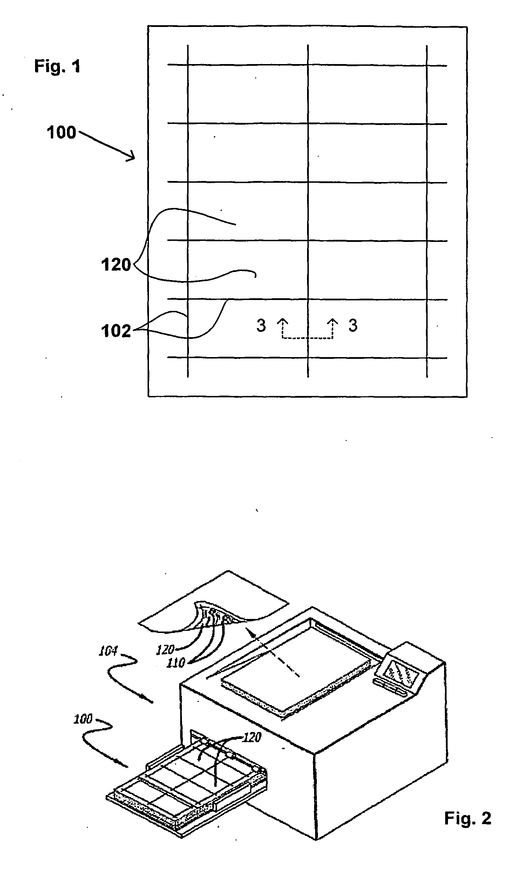

A card sheet in accordance with one embodiment of the present invention is shown generally at 100 in Fig. 1. As shown in Fig. 1, the card sheet 100 includes a plurality of pre-cut weakened lines 102 (which may also be referred to as separation lines). The weakened lines 102 define a plurality of individual sub-sheets or cards 120, which can be broken out from the card sheet 100 in accordance with the present invention.

As shown in Fig. 2, one or more of the card sheets 100 can be placed in the input tray of a printer (or copier) shown generically at 104. Any desired indicia 110 can be printed on (or around) the sub-sheets 120 of the card sheet by the printer (or copier) 104, or by other appropriate printing means. For example, other printing methods, including but not limited to, screen printing, ink-jet printing, flexo printing, gravure printing, thermal transfer printing, direct thermal printing and offset printing.

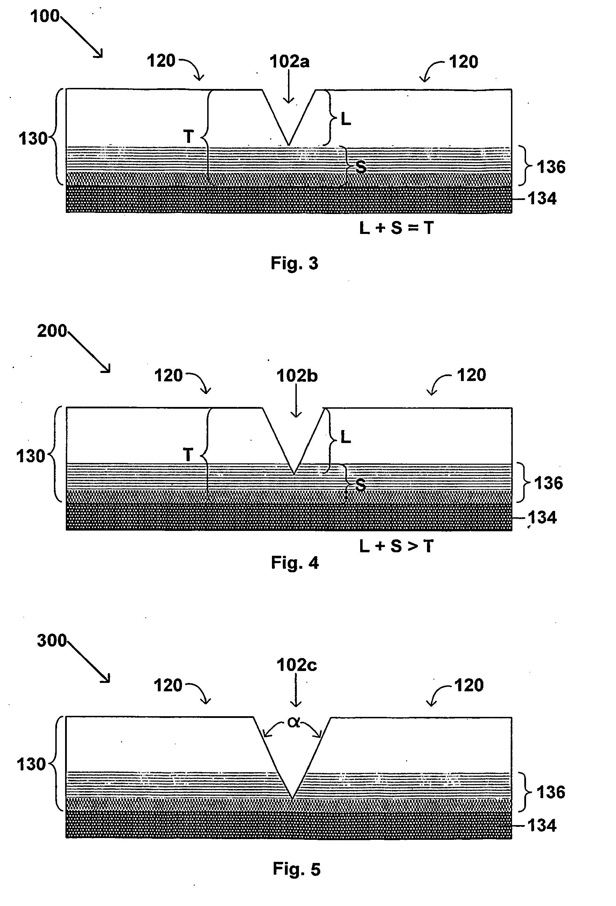

As shown in the cross-sectional view in Fig. 3, the card sheet 100 according to one embodiment of the invention comprises a top material layer 130 and an electron beam (EB) cured polymer layer 134 on a bottom surface of the top material layer 130. A weakened line 102a (such as a die-cut line) extends partially through the top material layer 130 to form the perimeters of the nascent individual sub-sheets 120.

As shown in Fig. 3, the top material layer 130 has been cut partially through its thickness, but not completely through to the electron beam cured polymer layer 134, to form the weakened line 102a. In the embodiment shown in Fig. 3, the depth of the weakened line 102a is less than the thickness of the top material layer 130. In other embodiments (not shown), the depth of the weakened line may be about equal to the thickness of the top material layer 130. In other embodiments, some of which are shown and discussed below, the depth of the weakened line is less than or equal to the thickness of the top material layer 130. The present invention advantageously provides a mechanism by which individual sub-sheets 120 can be cleanly broken from the card sheet 100 while still not requiring that the weakened line be cut all the way through the top material layer 130, or in some embodiments, even close to all the way through the top material layer 130.

As shown in Fig. 3, the card sheet 100 includes, in addition to the top material layer 130 and the electron beam curable polymer layer 134, a region 136 (indicated by brackets) in which the electron beam curable pre-polymer has diffused to a depth part of the way into the top material layer 130. In one embodiment, the region 136, defined by the depth or distance which the electron beam curable pre-polymer composition has diffused into the top material layer 130, has a thickness which is at least equivalent to the uncut thickness of the top material layer 130. Fig. 3 illustrates an embodiment in which the thickness of the region 136 is substantially equivalent to the uncut thickness of the top material layer 130.

The region 136 shown in the drawing figures represents diffusion of the uncured electron beam curable pre-polymer composition, originating from the electron beam curable polymer layer 134, into the top material layer 130. As will be understood, the amount of uncured electron beam curable pre-polymer penetrating by diffusion into the top material layer 130 would be expected to decrease with distance into the top material layer 130. Thus, the darkness of the region 136 as shown in Figs. 3-8 decreases with increasing depth into the top material layer 130. Thus, the darkness of the shading in the region 136 as shown in Figs. 3-8 decreases with depth into the top material layer 130 to illustrate schematically the expected corresponding decrease in amount of electron beam curable pre-polymer diffusing to the depths indicated schematically in the Figures. The illustrated decrease in density of diffused electron beam curable pre-polymer composition is intended as illustrative, not as limiting of the scope of the invention.

The depth of diffusion of the electron beam curable pre-polymer composition into the top material layer may be controlled by, for example, adjusting the viscosity of the composition, by selection of the diluent or additives to the electron beam curable pre-polymer composition, by selection of the nature and the molecular weight of the pre-polymer in the electron beam curable pre-polymer composition.

As shown in Fig. 4, in one embodiment, while the depth of the weakened line 102b is less than the thickness of the entire top material layer 130, the electron beam curable pre-polymer composition diffuses into the top material layer 130 to a depth such that the weakened line 102b extends into the region 136 in which the electron beam curable pre-polymer composition has diffused. Viewed alternatively, as shown in Fig. 4, the electron beam curable pre-polymer composition has diffused beyond the depth of the weakened lines 102b.

As shown in Fig. 5, in another embodiment, while again the depth of the weakened line 102c is less than the thickness of the entire top material layer 130, the electron beam curable pre-polymer composition diffuses into the top material layer 130 to a depth such that the weakened line 102c penetrates further into the region 136 in which the electron beam curable pre-polymer has diffused, as compared to the embodiments of Figs. 3 and 4.

Expressed in another way, if the total thickness of the top material layer 130 is "T", the depth of the weakened line 102 is "L", and the depth to which the electron beam curable pre-polymer diffuses into the top material layer from the bottom side is "S", then in one embodiment, L + S ≥ T, as shown, for example, in Figs. 3, 4 and 5. In another embodiment, L + S > T, as shown, for example, in Figs. 4 and 5. In another embodiment, L + S ≈ T, as shown, for example, in Fig. 3. In another embodiment, L + S = T. In one embodiment (not shown), L + S < T, but is substantially similar, that is, L + S is only slightly less than T. By slightly less, it is intended that the difference is small enough that the card stock will break cleanly, leaving little or no roughness along the broken edges.

This diffusion of the uncured electron beam curable pre-polymer composition into the top material layer 130 is an important aspect of the present invention, since the presence of the electron beam cured polymer on and diffused into the top material layer renders the uncut portion of the top material layer 130 sufficiently brittle to cause the uncut portion to break and separate cleanly when the sub-sheet 120 is removed from the card sheet 100, as described below.

In order to separate individual sub-sheets 120 from the card sheet 100, the top material layer 130 has the punched or die-cut weakened lines 102a, 102b, 102c, etc., as shown in the drawings. In one embodiment, the electron beam curable polymer layer 134 is not punched, only a portion of the region 136 is cut or punched. In one embodiment, the punching or die cutting operation forming the weakened lines 102a (etc.) may dent but not pierce the electron beam cured polymer layer. In another embodiment, the punching or die cutting operation forming the weakened lines 102 may penetrate only a slight distance into the electron beam cured polymer layer 134.

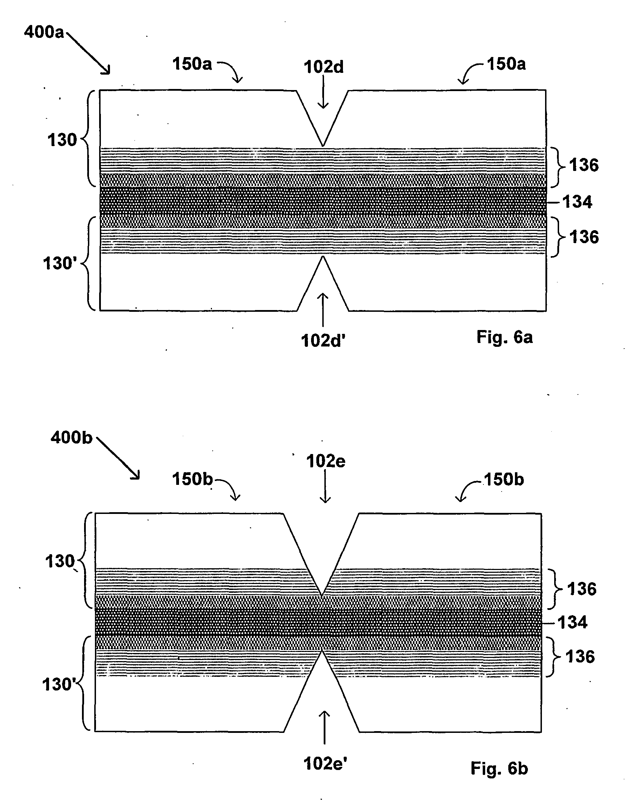

Figs. 6a and 6b are enlarged cross-sectional views of two additional embodiments of card sheets 400a and 400b in accordance with the present invention. In the embodiments shown in Figs. 6a and 6b, a second top material layer 130' has been applied to the electron beam curable polymer layer 134. In one embodiment, the second top material layer 130' is printable, as is the top material layer 130.

As shown in Figs. 6a and 6b, in these embodiments, the uncured electron beam curable pre-polymer diffuses into both the first top material layer 130 and the second top material layer 130' in a manner substantially similar to the embodiments shown in Figs. 3-5, to form a region or regions 136 in each of the top material layers 130, 130' in which the electron beam curable pre-polymer has diffused.

As shown in Fig. 6a, in this embodiment, both the top material layer 130 and the second top material layer 130' have been cut or punched to form the weakened lines 102d and 102d'. The depth of the weakened lines 102d and 102d' in Fig. 6a corresponds approximately to those of Fig. 3, that is, the depth of the weakened lines 102d, 102d' is sufficient to reach the diffusion depth of the region 136 diffused from the electron beam curable pre-polymer composition which forms the layer 134 on curing, but not through the entire thickness of the layers 130,130'.

As shown in Fig. 6b, in this embodiment, both the top material layer 130 and the second top material layer 130' have been cut or punched to form weakened lines 102e and 102e'. The depth of the weakened lines 102e and 102e' in Fig. 6b corresponds approximately to those of Fig. 5, that is, the depth of the weakened lines 102e, 102e' is sufficient to penetrate a substantial depth into the region 136 diffused from the electron beam curable pro-polymer composition which forms the layer 134 on curing, but not through the entire thickness of the layers 130, 130'.

As shown in Figs. 6a and 6b, when the card sheets 400a, 400b are broken or separated at the weakened lines 102d,102d' and 102e,102e', individual sub-sheets 150a, 150b, each having two top material layers 130, 130' on opposite faces, are obtained. The embodiments of Figs. 6a and 6b may have the electron beam curable pre-polymer diffused into the respective top material layers to form regions 136 having any of the disclosed relationships to either or both the depth of the weakened lines 102d, 102d' and/or 102e, 102e' and the thickness of the respective top material layers 130, 130'. The weakened lines 102d, 102d' and 102e, 102e' in any embodiment may be the same or different depths. Similarly, the depth or thickness of the regions 136 may be the same or different in each of the top material layer 130 and the second top material layer 130' in any embodiment.

The depth to which the pre-cut weakened lines are cut may be suitably selected, based on factors such as the expected depth of diffusion of the electron beam curable pre-polymer composition into the top material layer, the composition and porosity of the top material layer, the composition of the electron beam curable pre-polymercomposition, any pressure applied to the electron beam curable pre-polymer composition during the application to the top material layer, and other factors known to those in the art.

In addition, in any given embodiment, the two top material layers 130,130' may be the same or different in the embodiments shown in Figs. 6a, 6b. The material from which the top material layer 130 and the second top material layer 130' are formed may be appropriately selected from those described herein, based on the needs of the user and the type of sub-sheet 150a, 150b to be produced. In one embodiment, the second top material layer is paper, as is the top material layer in one embodiment. In one embodiment, when present, both the top material layers are paper.

In one embodiment, the top material layer (or one or both of the first and second top material layers when both are present) is top coated. The top coating may be any appropriate coating, such as a coating which enhances the printability of the coated layer. Suitable top coats can be selected by those of ordinary skill in the art, based upon the desired end use of the card stock. For example, a top coat which increases the "delta gloss" may be used, such as a coating made by blending specialty pigments such as talc or alumina, or specialty binders such as highly carboxylated styrene/butadiene latexes, into a matte coating composition. Another example includes a top coating containing a polyolefin resin and a pigment, for example porous particles of organic pigment material and calcium carbonate particles. Numerous such top coatings are known in the art.

In one embodiment, the top material layer (or one or both of the first and second top material layers when both are present) is a photoreceptive layer. In another embodiment, when present, both of the first and second top material layers are photoreceptive layers.

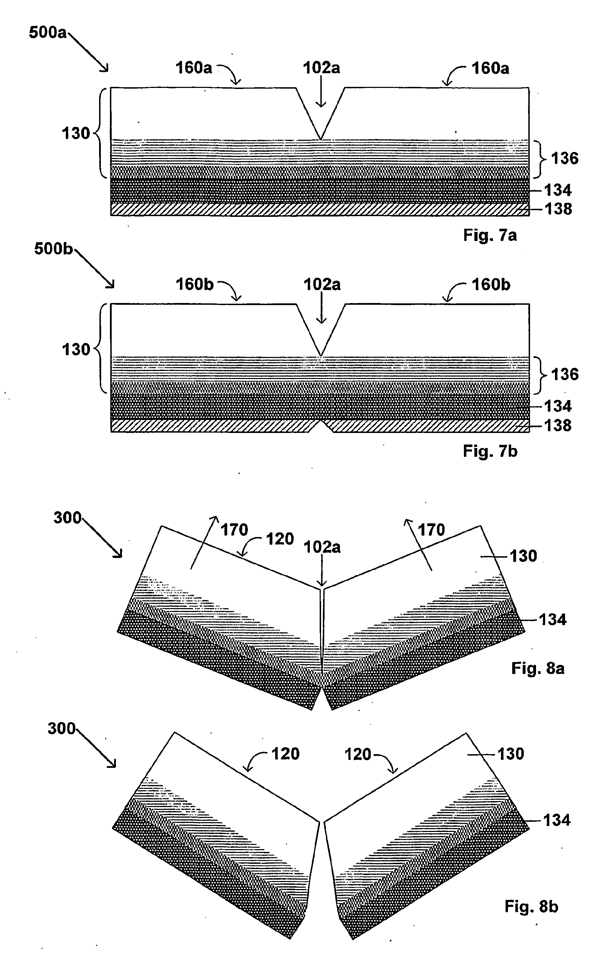

Figs. 7a and 7b are enlarged cross-sectional views of two further embodiments of card sheets 500a and 500b in accordance with the present invention. In the embodiments shown in Figs. 7a and 7b, an additional layer 138 has been applied to the electron beam curable polymer layer 134. In the embodiment shown in Fig. 7a, the additional layer 138 is applied over the bottom or lower surface of the card sheet 500a, and is not cut or scored. In this embodiment, the additional layer 138 may be formed of a material which is sufficiently brittle to break or separate together with the electron beam cured polymer layer 134 when it is broken during the separation process. In the embodiment shown in Fig. 7b, the additional layer 138 is applied over the bottom or lower surface of the card sheet 500b, and is cut or scored, to ease or enhance the separation process. In an embodiment such as shown in Fig. 7b, the additional layer 138 may be formed of any material, brittle or not brittle, since it is cut or scored to ease or enhance the separation process.

In one embodiment, the additional layer 138 is a printable layer, formed from any material known in the art to be receptive to printing, whether by ink jet, laser printing, or any other known printing method. For example, in one embodiment, the additional layer 138 may be a common inkjet coating for films, which allows printing with an inkjet printer. Such inkjet coatings are known to persons of ordinary skill in the art. In one exemplary embodiment, the inkjet coating includes one or more latex binders (e.g., vinyl acetate, ethylene vinyl acetate), one or more fixing agents (e.g., polyamine) and silica. In one embodiment, the layer 138 may be a top coat as described above. The additional layer 138 may be applied by any appropriate method.

In one embodiment, the step of applying includes coating a second pre-polymer mixture on the back side of the electron beam cured polymer layer and curing the mixture. The coating of a second pre-polymer mixture on the back side of the electron beam cured polymer layer, in one embodiment, is carried out after the electron beam curable pre-polymer composition has been diffused into the paper layer, and in one embodiment, after the electron beam curable pre-polymer composition has been cured.

In one embodiment, the curing of the second pre-polymer mixture includes irradiating the second pre-polymer mixture with UV light or with an electron beam. In one embodiment, the second pre-polymer mixture includes a photoinitiator. As is known, a photoinitiator is not required with electron beam curing. In an embodiment in which the second pre-polymer mixture is electron beam cured, it may be cured simultaneously with the primary electron beam curable pre-polymer composition.

In another embodiment, the curing of the second pre-polymer mixture includes thermal curing. In one embodiment, the second pre-polymer mixture includes a thermal initiator.

In one embodiment, to provide a electron beam cured polymer layer for sub-sheets punched or pre-cut in the card sheets 100, 200, 300, 400 and 500, the electron beam curable pre-polymer composition is applied directly onto the reverse side of the top material layer 130 such as by doctor blade coating, etc. In one embodiment, when the top material layer 130 has a weight of about 120 to about 300 g/m², the electron beam cured polymer layer 134 has a weight of about 10 to about 75 g/m². In another embodiment, when the top material layer 130 has a weight of about 150 to about 275 g/m², the electron beam cured polymer layer 134 has a weight of about 15 to about 60 g/m². In another embodiment, when the top material layer 130 has a weight of about 160 to about 250 g/m², the electron beam cured polymer layer 134 has a weight of about 20 to about 50 g/m².

The separation of the individual sub-sheets 120 from the card sheet 100 of the invention may be carried out by bending along the weakened lines 102,102a-102e in the direction toward the top material layer 130, whereby the electron beam cured polymer layer 134 snap-breaks cleanly along the weakened lines 102, 102a-e. For this purpose, in one embodiment, the electron beam cured polymer is brittle, in that it breaks cleanly and sharply without a significant amount of elongation or stretching and without leaving dangling fibers or a rough or uneven edge.

In one embodiment, the elongation at break of the electron beam cured polymer layer 134 should be exceeded; that is, the elastic and plastic deformation of the electron beam cured polymer layer 134 should be as small as possible. In addition, the electron beam cured polymer layer should have resistance to tearing. In other words, it should be brittle, so that when one side of the electron beam cured polymer layer is subjected to tension exceeding its elongation at break, the break will continue to the side that is not bent. In one embodiment, the electron beam cured polymer layer 134 on the back side of the top material layer 130 has a stress-at-break in the range of about 10 to about 50 MPa, and in another embodiment, from about 15 to about 25 MPa. In one embodiment, the electron beam cured polymer layer 134 has an elongation at break in the range of about 5 to about 120%, and in another embodiment, from about 20 to about 50%. The data on stress-at-break and elongation at break refer to EN-ISO 527-3/2/500. The data on the bending stress refer to EN-ISO 178.

In one embodiment, the elongation at break of the electron beam cured polymer layer 134 further depends on the thickness of the top material layer 130. In this embodiment, the thicker the top material layer 130, the less the elongation of the electron beam curable polymer layer 134 is and the sooner the stress-at-break of the polymer layer 134 is attained. The aforementioned weights of the top material layer 130 may be appropriate for this embodiment.

The electron beam cured polymer layer 134 applied to the reverse or back side of the card sheet 100 in one embodiment has a bending stress in the range of about 200 to 1200 MPa, and in another embodiment, a bending stress of about 400 to 900 MPa. In one embodiment, the electron beam cured polymer layer 134 has an elongation at maximum tensile strength from about 2 to about 10 percent.

The individual sub-sheets 120 broken out of the card sheets 100, 200, 300, 400, 500, according to the invention, may be constructed and used as calling (business) cards, photograph cards, post cards or the like as would be apparent to those skilled in the art from this disclosure. Various length and width dimensions may be selected according to the desired use, and the present invention is not limited to any particular sizes. For example, sub-sheet sizes such as 5.08cm x 8.89cm (2 x 3. 5 inches) for business cards, 10.16x15.24cm, 12.7x17.78cm, 5.08x7.62cm and 20.32x25.40cm (4x6, 5x7, 2x3 and 8x10 inches) may be appropriate for photocards. The card sheet itself can, for example, be "letter" size (81/2 x 11 in. or 21.6 x 27.94 cm),"legal" size (81/2 x 14 in. or 21. 6 x 35. 56 cm) or A4 size (8.27 x 11.69 in. or 21 x 29. 7 cm). These card sheet and sub-sheet sizes are exemplary only, and are compatible with standard sized printers and copiers, but any other size may be used.

In one embodiment, the top material layer 130 can have a thickness from about 120 µm to about 300 µm and in another embodiment from about 150 µm to about 250 µm.

While the lower limit is important for the breaking behaviour (for very brittle electron beam curable polymer layers, thinner and less stiff materials are acceptable), the upper limit is important for the desired total thickness of the product.

In one embodiment, thickness of the electron beam cured polymer layer 134 ranges from about 10 to about 75g/m2, or 10 to about 75, µm. In one embodiment, thickness of the electron beam cured polymer layer 134 ranges from about 20 to about 60 g/m2, or 20 to about 60 µm.

The mechanism for breaking a card sheet of the present invention is illustrated in Figs. 8a and 8b, using the embodiment of the card sheet shown in Fig. 5. As described above, Fig. 5 shows a cross-section of a portion of a card sheet 300 in accordance with an embodiment of the present invention. In one embodiment, the sheet has been passed through a printer (or copier) 104 and the desired indicia printed on the upper surface of the top material layer 130. A V-shaped weakened line 102c is illustrated in Fig. 5 extending through a portion, but not all, of the top material layer 130 and into the region 136, but not extending to the electron beam cured polymer layer 134. The weakened line 102c is illustrated to have an angle a wherein, in one embodiment, a is from about 40 to about 80 degrees, and in one embodiment a is from about 50 to about 75 degrees, and in one embodiment a is about 60 degrees.

As shown in Fig. 8a, to separate the individual sub-sheets 120 from the rest of the sheet 300, the sheet is folded upwards or towards the top material layer 130 and about the weakened line 102c, as shown by arrows 170. The bottom layer 134, as is schematically illustrated in Fig. 8a, in one embodiment begins to break when the sheet 300 is bent, and breaks along a clean straight line beneath (adjacent) the die cut line. As shown in Fig. 8b, the remainder of the sheet 300 breaks in a clean straight line due to the presence of the brittle electron beam cured polymer in the region 136 of the top material layer 130. In other words, in one embodiment, with only a single fold the sheet 300 snap breaks cleanly to free the sub-sheet 120.

While the breaking is illustrated in Figs. 8a and 8b using the embodiment of Fig. 5, the same basic mechanism applies to each of the other embodiments of the present invention.

In one embodiment, the top material layer or layers is printable. A "printable top material layer" means the card sheet material can be printed with an inkjet printer and/or with a laser printer 104 and/or with other commercial printing methods such as offset printing, and/or by writing instruments. Writing instruments can include, for example, pens, pencils or the like. As the top material layer 130, 130', generally any card stock materials may be used which can be printed with an inkjet printer and/or a laser printer 104. Such card stock materials can, for example, also be coated or uncoated, dull or glossy, marmorated or obliquely transparent or they can have a linen or other topographic structure. When the individual sub-sheets 120 are to be calling or business cards, in one embodiment, a card stock material having a weight of about 150 to about 250 g/m² may be used. Examples of useful card stock materials include matte coated paper available from Felix Schoeller Specialty Papers (Osnabruck, Germany) and photoreceptive papers from Kanzaki Specialty Papers (Springfield Mass.); as well as laser papers available from Kohler (Germany), Neusiedler Group (Austria), and Monadnock Paper Mills (New Hampshire). The papers, when used in conjunction with the electron beam cured polymer layer, have a caliper suitable for the desired use, such as business cards or photo cards.

### ELECTRON BEAM CURABLE PRE-POLYMERS AND CURED POLYMERS

Generally, any of a variety of electron beam curable materials may be used in the present invention. Known electron beam curable materials include one or more radiation curable pre-polymer. As used herein, a pre-polymer may include a monomer, an oligomer and/or a cross-linkable low molecular weight polymer. A pre-polymer can be polymerized, further polymerized and/or cross-linked to form higher molecular weight polymers. The higher molecular weight polymers impart sufficient stiffness and/or brittleness to the card stock or substrate to provide a desirably easy snap break to cleanly separate individual units or sub-sheets from the sheet of card stock.

In one embodiment, electron beam curable pre-polymers or monomers include epoxies, urethanes, polyesters, acrylics, methacrylates, cyanoacrylates and the like. Reactive diluents such as hexanediol diacrylate, pentaerythritol tetraacrylate, N-vinylpyrrolidone, and the like, can be used to control viscosity of the coating before cure and to modify cross-link density. The electron beam curable pre-polymer composition may include one or more diluents such as water, alcohols or organic solvents to adjust and control the viscosity of the composition.

The electron beam curable pre-polymers generally are ethylenically unsaturated compounds. The unsaturated compounds may contain one or more olefinic double bonds, and they may be low molecular weight compounds, (monomeric) or high molecular weight compounds (oligomeric). Illustrative examples of monomers containing one double bond are acrylates such as alkyl(meth)acrylates or hydroxyalkyl(meth)acrylates such as methyl-, ethyl-, butyl-, 2-ethylhexyl- or 2-hydroxyethylacrylate, isobornylacrylate, methyl- or ethylmethacrylate. Further examples of electron beam curable monomers are acrylonitrile, acrylamide, methacrylamide, N-substituted (meth)acrylamides, vinyl esters such as vinyl acetate, vinyl ethers such as isobutylvinyl ether, styrene, alkylstyrenes and halostyrenes, N-vinylpyrrolidone, vinyl chloride or vinylidene chloride.

Monomers containing a plurality of double bonds may include monomers such as the diacrylates of ethylene glycol, 1,3-propylene glycol, 1,4-butanediol, 1,4-cyclohexane diol, neopentyl glycol, hexamethylene glycol, or bisphenol A polyacrylates such as trimethylolpropane triacrylate and pentaerythritol triacrylate ortetraacrylate, vinyl acrylate, divinyl benzene, divinyl succinate, diallyl phthalate, triallylphosphate, triallylisocyanurate or tris(2-acryloyloxy)ethyl-isocyanurate.

Typical examples of high molecular weight (oligomeric) polyunsaturated compounds are acrylated epoxy resins, acrylated polyethers, acrylated polyurethanes or acrylated polyesters. Further examples of unsaturated oligomers are unsaturated polyester resins which are normally prepared from maleic acid, phthalic acid and one or more diols and which have molecular weights of about 500 to about 3000. Such unsaturated oligomers may also be referred to as pre-polymers. Single component systems based on electron beam curable pre-polymers are often used as binders for printing inks. Unsaturated polyester resins may be used in two-component systems together with a monounsaturated monomer such as described above, in one embodiment with styrene.

In addition to the above described binder materials, the electron beam curable pre-polymer compositions used in the present invention may also contain coloring matter selected from organic pigments, inorganic pigments, body pigments and dyes which are known and have been used in this art. Examples of useful pigments include titanium dioxide, cadmium yellow, cadmium red, cadmium maroon, black iron oxide, carbon black, chrome green, gold, silver, aluminum and copper. Examples of dyes include alizarine red, Prussian blue, auramin naphthol, malachite green, etc. Generally the concentration of the pigment or dye in the ink will be from about 0 to about 70% by weight, and in one embodiment, from about 0.1% to about 50% by weight.

In addition to the above described coloring matter, the electron beam curable pre-polymer compositions used in the present invention may also contain fillers, extenders, surfactants, and the like which are known and have been used in this art. Examples of useful fillers and extenders include silicon dioxide, fumed silica, glass or ceramic microspheres, and glass or ceramic bubbles. Generally the concentration of the filler or extender will be from about 0 to about 70% by weight, and in one embodiment, from about 0.5% to about 50% by weight.

For electron beam curing, dosage rates of from 0.1 to about 10 megarads, generally below 4 megarads, provide the desirable curing. Generally, for electron beam curing, the exposure is quite brief and curing is completed in less than about 0.001 to about 0.1 seconds, although longer exposure times may be used. The actual curing time needed to give proper curing for various coatings can be readily determined by one skilled in the art with a minimum of experimentation.

In one embodiment, electron beam curable pre-polymer compositions which may include epoxy pre-polymers acrylated to provide terminal polymerizable acrylate groups, or acrylated polyether-polyisocyanate pre-polymers or oligomers which may be dissolved in acrylate monomers which are copolymerizable therewith. These materials may also be referred to as reactive diluents. Suitable monomers or reactive diluents include trimethylolpropane triacrylate, 1,4-butanediol diacrylate, neopentylglycol diacrylate, pentaerythritol tetraacrylate, 1,6-hexanediol diacrylate, etc.

In one embodiment, a useful electron beam curable pre-polymer composition comprises a mixture of: from about 30% to about 60% by weight of at least one compound selected from urethane acrylate acrylic oligomers, acrylated acrylic oligomers and epoxy acrylate acrylic oligomers; from about 30% to about 50% by weight of at least one compound selected from monofunctional acrylate monomers, difunctional acrylate monomers and acrylic monomers; and about 0% to 15% by weight of trifunctional acrylate monomers.

In one embodiment, a useful electron beam curable pre-polymer composition comprises one or more electron beam curable monomer or oligomer (again, sometimes referred to as a reactive diluent), such as triethylene glycol dimethacrylate, trimethylolpropane triacrylate, ethoxylated pentaerythritol triacrylate, propoxylated neopentyl glycol diacrylate and methacrylate, and mixtures thereof.

In one embodiment, a useful electron beam curable pre-polymer composition comprises N-vinyl formamide and an oligomer which includes epoxy-acrylate resins, polyester-acrylate resins, polyurethane-acrylate resins, acrylic acrylate resins, vinyl-ether resins, etc.

In one embodiment, a useful electron beam curable pre-polymer composition comprises an acrylated aliphatic urethane in combination with a methacrylic functionalized colloidal silica and acrylic ester monomer.

In one embodiment, a useful electron beam curable pre-polymer composition comprises (i) an acrylated or methacrylated organic polyamino compound, and (ii) an acrylated or methacrylated organic polyhydroxy compound.

Throughout the specification and claims, the terms "acrylic" and "acrylate" are used generally to include derivatives of acrylic acids as well as substituted acrylic acids such as methacrylic acid, ethacrylic acid, etc., unless clearly indicated otherwise.

In one embodiment, a group of useful electron beam curable pre-polymer composition comprises isocyanate-modified acrylic, methacrylic and itaconic acid esters of polyhydric alcohols. The preparation of such isocyanate modified esters is given in U.S. Pat. No. 3,783,151, issued Jan. 1, 1974 to Carlick et al., U.S. Pat. No. 3,759,809 issued Sept.18,1973 to Carlick et al. and U.S. Pat. No. 3,825,479, issued July 3,1974 to Carlick et al.

In one embodiment, another useful electron beam curable pre-polymer composition comprises an acrylate pre-polymer derived from the partial reaction of pentaerythritol with acrylic acid or acrylic acid esters. Electron beam curable compositions based on such pre-polymers having an acrylate functionality of between about 2 and 3 are available commercially.

Such electron beam curable pre-polymer compositions based on the isocyanate modified esters or the acrylate pre-polymer may also include reactive diluents such as tetraethylene glycol diacrylate, and may further include viscosity adjusting agents such as butyl Cellosolve® acetate or hexadecyl alcohol. Reactive diluents, such as these polyol diacrylates, are radiation curable but are of a lower viscosity than the isocyanate modified esters and may be used to lower the viscosity of the coating compositions to enhance diffusion of the pre-polymer composition into the card stock.

In one embodiment, the electron beam curable pre-polymer composition is a relatively low viscosity liquid so that the composition readily diffuses into the card stock when applied as a coating to the substrate, prior to the electron beam curing. In one embodiment, the viscosity of the electron beam curable pre-polymer composition is sufficiently low to enhance the diffusion of the electron beam curable pre-polymer composition into the card stock or substrate. In one embodiment, the electron beam curable pre-polymer composition may have a viscosity at 25°C. of from about 0.2 to about 1000 mPa•s. In another embodiment, the electron beam curable pre-polymer composition has a viscosity at 25°C. of from about 0.5 to about 100 mPa•s. In yet another embodiment, the electron beam curable pre-polymer composition has a viscosity at 25°C. of about 1 to about 50 mPa•s.

In one embodiment, the present invention relates to a method of making a card sheet, including steps of providing a top material layer having a front side and a back side; cutting partially through the top material layer to form weakened lines defining subdivided sheets on the card sheet; applying an electron beam curable pre-polymer composition to the back side of the top material layer, the composition having a viscosity effective to allow at least a portion of the electron beam curable composition to diffuse into the back side of the top material layer to a depth at or near the weakened lines; and electron beam curing the pre-polymer.

The electron beam curable pre-polymer composition may be applied to the top material layer of the card stock by any appropriate method known in the art. Techniques conventional in the industry for applying such coatings to a substrate can be used, such as roll coating, knife over roll coating, and extrusion or slot coating. In addition, doctor blade, trailing edge coater, roller, brush, spray may be used.

In an embodiment such as that shown in Figs. 6a and 6b, the electron beam curable pre-polymer composition may be applied either to only one or to both of the top material layers 130, after which the two top material layers 130 can be laminated to each other to form a structure similar to that of Figs. 6a and 6b. The electron beam curing may be carried out at any appropriate time.

The steps of the method may be carried out in any appropriate order. The weakened line 102 may be cut into the top material layer 130 at any appropriate time. Thus, in one embodiment, the weakened lines are formed in the top material layer prior to applying the electron beam curable pre-polymer composition thereto. In another embodiment, the weakened lines are formed in the top material layer subsequent to applying the electron beam curable pre-polymer composition thereto. In another embodiment, the weakened lines are formed in the top material layer subsequent to curing the electron beam curable pre-polymer composition.

While the invention has been explained in relation to various of its embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A card sheet (100, 200, 300, 400, 500) comprising:
a top material layer (130) having pre-cut weakened lines (102) extending partially but not completely through the top material layer (130), the top material layer having a front surface and a back surface; and
an electron beam cured polymer layer (134) applied as an electron beam curable pre-polymer composition to the back side of the top material layer (130), wherein at least a portion of the pre-polymer composition is diffused into the top material layer (130) to a depth which, upon electron beam curing to form the electron beam cured polymer, renders the top material layer (130) breakable along the weakened lines (102).

2. The card sheet of claim 1 wherein the weakened lines (102) define one or more sub-sheets in the card sheet.

3. The card sheet of claim 1 wherein the front surface of the top material layer (130) is printable.

4. The card sheet of claim 1 wherein the electron beam curable pre-polymer composition comprises a monomer, an oligomer and/or a cross-linkable polymer which can be polymerized and/or cross-linked by application of an electron beam thereto.

5. The card sheet of claim 1 wherein the electron beam cured polymer layer (134) at the weakened line has a stress-at-break according to EN-ISO 527-3/2/500 in the range of about 10 to about 50 MPa and an elongation at break according to EN-ISO 527-3/2/500 in the range of about 5 to about 120%.

6. The card sheet of claim 1 wherein the electron beam cured polymer layer (134) at the weakened line has a bending stress according to EN-ISO 178 in the range of about 200 to about 1200 MPa.

7. The card sheet of claim 1 wherein the top material layer (130) is paper.

8. The card sheet of claim 1 wherein the top material layer (130) is top coated.

9. The card sheet of claim 1 wherein the top material layer (130) comprises a photoreceptive layer.

10. The card sheet of claim 1 further comprising a second top material layer (130') on the back side of the electron beam cured polymer layer (134).

11. The card sheet of claim 10 wherein the second top material layer (130') has pre-cut weakened lines (102') matching the pre-cut weakened lines (102) in the top material layer (130).

12. The card sheet of claim 10 wherein the second top material layer (130') is printable.

13. The card sheet of claim 10 wherein both the top material layer (130) and the second top material layer (130') are paper.

14. The card sheet of claim 10 wherein one or both of the top material layer (130) and the second top material layer (130') comprise a top coat.

15. The card sheet of claim 10 wherein one or both of the top material layer (130) and the second top material layer (130') comprise a photoreceptive layer.

16. The card sheet of claim 1 wherein the card sheet can be written upon with a writing instrument.

17. The card sheet of claim 1 wherein the electron beam cured polymer layer (134) has elongation at break and stress-at-break properties such that after the sheet has been passed through a printer or copier and a printing operation conducted on the printable surface, the sheet snap-breaks along the die cut lines (102) when the sheet is folded on the weakened lines (102) to form individual printed subdivided sheets.

18. The card sheet of claim 1 wherein the electron beam curable pre-polymer composition has a viscosity effective to allow the pre-polymer composition to diffuse into the top material layer (130) to the depth which renders the top material layer (130) cleanly breakable along the weakened lines (102).

19. The card sheet of claim 1 wherein the electron beam curable pre-polymer composition has a viscosity at 25°C. of from about 0.2 to about 1000 mPa·s.

20. A method of making a card sheet, comprising:
providing a top material layer having a front side and a back side;
cutting partially through the top material layer to form weakened lines defining subdivided sheets on the card sheet;
applying an electron beam curable pre-polymer composition to the back side of the top material layer, the composition having a viscosity effective to allow at least a portion of the pre-polymer composition to diffuse into the back side of the top material layer to a depth at or near the weakened lines; and
electron beam curing the pre-polymer.

21. The method of claim 20 further comprising a step of breaking one or more of the subdivided sheets from the card sheet.

22. The method of claim 20 wherein the top material layer is printable.

23. The method of claim 20 wherein the top material layer is a cardstock.

24. The method of claim 20 wherein the top material layer has a photoreceptive surface.

25. The method of claim 20 wherein the top material layer is top coated.

26. The method of claim 20 wherein the cutting does not penetrate through the diffused electron beam curable pre-polymer or cured polymer.

27. The method of claim 20 wherein the cutting comprises at least one of die cutting or punching.

28. The method of claim 20 wherein the applying includes coating a solution of the electron beam curable pre-polymer composition onto the back side of the top material layer and heating the coated solution to remove diluent.

29. The method of claim 20 wherein the electron beam curable pre-polymer composition comprises a reactive diluent.

30. The method of claim 20 wherein the applying includes coating the pre-polymer composition on the back side and curing the pre-polymer prior to the cutting.

31. The method of claim 20 wherein a second curable pre-polymer mixture is coated on the back side of the electron beam curable pre-polymer layer (134) and subsequently curing both curable pre-polymers, wherein the curing comprises (a) curing by irradiating the second pre-polymer mixture with UV light, (b) thermal curing, (c) electron beam curing, or a combination of two or more of (a)-(c).

32. The method of claim 31 wherein the second curable pre-polymer mixture comprises a photoinitiator, a thermal initiator or a combination thereof.

33. The method of claim 31 wherein (c) is carried out together with the curing of the electron beam curable pre-polymer.

34. The method of claim 20 wherein the electron beam curable pre-polymer composition comprises a monomer, an oligomer and/or a cross-linkable polymer which can be polymerized and/or cross-linked by application of an electron beam thereto.

35. The method of claim 20, wherein the weakened lines are formed in the top material layer (a) prior to applying the electron beam curable pre-polymer composition thereto, (b) subsequent to applying the electron beam curable pre-polymer composition thereto, or (c) subsequent to curing the electron beam curable pre-polymer composition.

## Patentansprüche

1. Kartenbogen (100, 200, 300, 400, 500) umfassend:
eine Deckmaterialschicht (130), die vorgeschnittene geschwächte Linien (102) aufweist, die sich teilweise, jedoch nicht vollständig, durch die obere Materialschicht (130) hindurch erstrecken, wobei die obere Materialschicht eine vordere Fläche und eine hintere Fläche aufweist; und
eine elektronenstrahlausgehärtete Polymerschicht (134), die als eine elektronenstrahlaushärtbare Präpolymerzusammensetzung auf der Rückseite der oberen Materialschicht (130) aufgebracht wird, wobei mindestens ein Teil der Präpolymerzusammensetzung in die obere Materialschicht (130) bis zu einer Tiefe eindiffundiert, die auf das Elektronenstrahlaushärten zur Bildung des elektronenstrahlausgehärteten Polymers hin die obere Materialschicht (130) den geschwächten Linien (102) entlang aufbrechbar macht.

2. Kartenbogen nach Anspruch 1, wobei die geschwächten Linien (102) ein oder mehrere Unterbogen in dem Kartenbogen definieren.

3. Kartenbogen nach Anspruch 1, wobei die vordere Fläche der oberen Materialschicht (130) bedruckbar ist.

4. Kartenbogen nach Anspruch 1, wobei die elektronenstrahlaushärtbare Präpolymerzusammensetzung ein Monomer, ein Oligomer und/oder ein vernetzbares Polymer umfasst, das durch Aufbringen eines Elektronenstrahls darauf polymerisiert und/oder vernetzt werden kann.

5. Kartenbogen nach Anspruch 1, wobei die elektronenstrahlausgehärtete Polymerschicht (134) an der geschwächten Linie eine Beanspruchung bei Bruch nach EN-ISO 527-3/2/500 im Bereich von etwa 10 bis etwa 50 MPa und eine Bruchdehnung nach EN-ISO 527-3/2/500 im Bereich von etwa 5 bis etwa 120 % aufweist.

6. Kartenbogen nach Anspruch 1, wobei die elektronenstrahlausgehärtete Polymerschicht (134) an der geschwächten Linie eine Biegebeanspruchung nach EN-ISO 178 im Bereich von etwa 200 bis etwa 1200 MPa aufweist.

7. Kartenbogen nach Anspruch 1, wobei die obere Materialschicht (130) aus Papier besteht.

8. Kartenbogen nach Anspruch 1, wobei die obere Materialschicht (130) deckbeschichtet ist.

9. Kartenbogen nach Anspruch 1, wobei die obere Materialschicht (130) eine fotorezeptive Schicht umfasst.

10. Kartenbogen nach Anspruch 1, des Weiteren eine zweite obere Materialschicht (130') auf der Rückseite der elektronenstrahlausgehärteten Polymerschicht (134) umfassend.

11. Kartenbogen nach Anspruch 10, wobei die zweite obere Materialschicht (130') vorgeschnittene geschwächte Linien (102') aufweist, die mit den vorgeschnittenen geschwächten Linien (102) in der oberen Materialschicht (130) übereinstimmen.

12. Kartenbogen nach Anspruch 10, wobei die zweite obere Materialschicht (130') bedruckbar ist.

13. Kartenbogen nach Anspruch 10, wobei sowohl die obere Materialschicht (130) als auch die zweite obere Materialschicht (130') aus Papier bestehen.

14. Kartenbogen nach Anspruch 10, wobei eine oder beide der oberen Materialschicht (130) und der zweiten oberen Materialschicht (130') eine Deckschicht umfassen.

15. Kartenbogen nach Anspruch 10, wobei eine oder beide der oberen Materialschicht (130) und der zweiten oberen Materialschicht (130') eine fotorezeptive Schicht umfassen.

16. Kartenbogen nach Anspruch 1, wobei der Kartenbogen mit einem Schreibinstrument beschrieben werden kann.

17. Kartenbogen nach Anspruch 1, wobei die elektronenstrahlausgehärtete Polymerschicht (134) Bruchdehnungs- und Bruchbeanspruchungseigenschaften aufweist, derart, dass nach Durchführen des Bogens durch einen Drucker oder Kopierer und einem auf der bedruckbaren Oberfläche durchgeführten Druckvorgang der Bogen den gestanzten Linien (102) entlang durch Knicken aufbricht, wenn der Bogen den geschwächten Linien (102) entlang zur Bildung einzelner gedruckter unterteilter Bogen gefalzt wird.

18. Kartenbogen nach Anspruch 1, wobei die elektronenstrahlaushärtbare Präpolymerzusammensetzung eine Viskosität aufweist, die effektiv ist, um es der Präpolymerzusammensetzung zu erlauben, in die obere Materialschicht (130) bis zu der Tiefe hineinzudiffundieren, die die obere Materialschicht (130) den geschwächten Linien (102) entlang glatt brechbar macht.

19. Kartenbogen nach Anspruch 1, wobei die elektronenstrahlaushärtbare Präpolymerzusammensetzung eine Viskosität bei 25 °C von etwa 0,2 bis etwa 1000 mPa·s aufweist.

20. Methode zum Herstellen eines Kartenbogens, umfassend:
das Bereitstellen einer oberen Materialschicht, die eine Vorder- und eine Rückseite aufweist;
das teilweise Durchschneiden durch die obere Materialschicht zur Bildung geschwächter Linien, die unterteilte Bogen auf dem Kartenbogen definieren;
das Aufbringen einer elektronenstrahlaushärtbaren Präpolymerzusammensetzung auf die Rückseite der oberen Materialschicht, wobei die Zusammensetzung eine Viskosität aufweist, die wirksam ist, um es mindestens einem Teil der Präpolymerzusammensetzung zu erlauben, in die Rückseite der oberen Materialschicht bis zu einer Tiefe an oder in der Nähe der geschwächten Linien hineinzudiffundieren; und
das Elektronenstrahlaushärten des Präpolymers.

21. Methode nach Anspruch 20, des Weiteren umfassend einen Schritt des Abbrechens eines oder mehrerer der unterteilten Bogen von dem Kartenbogen.

22. Methode nach Anspruch 20, wobei die obere Materialschicht bedruckbar ist.

23. Methode nach Anspruch 20, wobei die obere Materialschicht ein Kartenrohmaterial ist.

24. Methode nach Anspruch 20, wobei die obere Materialschicht eine fotorezeptive Oberfläche aufweist.

25. Methode nach Anspruch 20, wobei die obere Materialschicht deckbeschichtet ist.

26. Methode nach Anspruch 20, wobei das Schneiden nicht durch das diffundierte elektronenstrahlaushärtbare Präpolymer oder ausgehärtete Polymer hindurchdringt.

27. Methode nach Anspruch 20, wobei das Schneiden mindestens eines von Stanzen oder Lochen umfasst.

28. Methode nach Anspruch 20, wobei das Aufbringen das schichtförmige Aufbringen einer Lösung der elektronenstrahlaushärtbaren Präpolymerzusammensetzung auf die Rückseite der oberen Materialschicht und das Erhitzen der schichtförmig aufgebrachten Lösung zum Entfernen von Verdünnungsmittel einschließt.

29. Methode nach Anspruch 20, wobei die elektronenstrahlaushärtbare Präpolmyerzusammensetzung ein reaktives Verdünnungsmittel umfasst.

30. Methode nach Anspruch 20, wobei das Aufbringen das schichtförmige Aufbringen der Präpolymerzusammensetzung auf die Rückseite und das Aushärten des Präpolymers vor dem Schneiden einschließt.

31. Methode nach Anspruch 20, wobei eine zweite aushärtbare Präpolymermischung schichtförmig auf die Rückseite der elektronenstrahlaushärtbaren Präpolymerschicht (134) aufgebracht wird und daraufhin beide aushärtbaren Präpolymere ausgehärtet werden, wobei das Aushärten (a) das Aushärten durch Bestrahlen der zweiten Präpolymermischung mit UV-Licht, (b) das Wärmeaushärten, (c) das Elektronenstrahlaushärten oder eine Kombination von zwei oder mehreren von (a) - (c) umfasst.

32. Methode nach Anspruch 31, wobei die zweite aushärtbarer Präpolymermischung einen Fotoinitiator, einen Wärmeinitiator oder eine Kombination derselben umfasst.

33. Methode nach Anspruch 31, wobei (c) zusammen mit dem Aushärten des elektronenstrahlaushärtbaren Präpolymers durchgeführt wird.

34. Methode nach Anspruch 20, wobei die elektronenstrahlaushärtbare Präpolymerzusammensetzung ein Monomer, ein Oligomer und/oder ein vernetzbares Polymer umfasst, das durch Aufbringen eines Elektrönenstrahls darauf polymerisiert und/oder vernetzt werden kann.

35. Methode nach Anspruch 20, wobei die geschwächten Linien in der oberen Materialschicht (a) vor Aufbringen der elektronenstrahlaushärtbaren Präpolymerzusammensetzung darauf, (b) auf das Aufbringen der elektronenstrahlaushärtbaren Präpolymerzusammensetzung darauf hin oder (c) auf das Aushärten der elektronenstrahlaushärtbaren Präpolymerzusammensetzung hin gebildet werden.

## Revendications

1. Feuille pour carte (100, 200, 300, 400, 500) comprenant:
une couche de matériau de dessus (130) possédant des lignes affaiblies prédécoupées (102) s'étendant partiellement mais pas complètement à travers la couche de matériau de dessus (130), la couche de matériau de dessus présentant une surface avant et une surface arrière; et
une couche de polymère durci par un faisceau électronique (134) appliquée sous forme d'une composition de pré-polymère durcissable par un faisceau électronique sur la face arrière de la couche de matériau de dessus (130), dans laquelle au moins une portion de la composition de pré-polymère est diffusée dans la couche de matériau de dessus (130) à une profondeur qui, à la suite d'un durcissement par un faisceau électronique pour former le polymère durci par un faisceau électronique, rend la couche de matériau de dessus (130) déchirable le long des lignes affaiblies (102).

2. Feuille pour carte selon la revendication 1, dans laquelle les lignes affaiblies (102) définissent une ou plusieurs sous-feuilles dans la feuille pour carte.

3. Feuille pour carte selon la revendication 1, dans laquelle la surface avant de la couche de matériau de dessus (130) est imprimable.

4. Feuille pour carte selon la revendication 1, dans laquelle la composition de pré-polymère durcissable par un faisceau électronique comprend un monomère, un oligomère et/ou un polymère réticulable qui peut être polymérisé et/ou réticulé par l'application d'un faisceau électronique sur celui-ci.

5. Feuille pour carte selon la revendication 1, dans laquelle la couche de polymère durci par un faisceau électronique (134) au niveau de la ligne affaiblie possède une contrainte à la rupture selon la norme EN-ISO 527-3/2/500 dans l'intervalle d'environ 10 à environ 50 MPa et un allongement à la rupture selon la norme EN-ISO 527-3/2/500 dans l'intervalle d'environ 5 à environ 120%.

6. Feuille pour carte selon la revendication 1, dans laquelle la couche de polymère durci par un faisceau électronique (134) au niveau de la ligne affaiblie possède une contrainte de flexion selon la norme EN-ISO 178 dans l'intervalle d'environ 200 à environ 1200 MPa.

7. Feuille pour carte selon la revendication 1, dans laquelle la couche de matériau de dessus (130) est un papier.

8. Feuille pour carte selon la revendication 1, dans laquelle la couche de matériau de dessus (130) est revêtue sur le dessus.

9. Feuille pour carte selon la revendication 1, dans laquelle la couche de matériau de dessus (130) comprend une couche photo-réceptive.

10. Feuille pour carte selon la revendication 1, comprenant en outre une deuxième couche de matériau de dessus (130') sur la face arrière de la couche de polymère durci par un faisceau électronique (134).

11. Feuille pour carte selon la revendication 10, dans laquelle la deuxième couche de matériau de dessus (130') possède des lignes affaiblies prédécoupées (102') qui sont alignées avec les lignes affaiblies prédécoupées (102) dans la couche de matériau de dessus (130).

12. Feuille pour carte selon la revendication 10, dans laquelle la deuxième couche de matériau de dessus (130') est imprimable.

13. Feuille pour carte selon la revendication 10, dans laquelle à la fois la couche de matériau de dessus (130) et la deuxième couche de matériau de dessus (130') sont un papier.

14. Feuille pour carte selon la revendication 10, dans laquelle une ou les deux de la couche de matériau de dessus (130) et de la deuxième couche de matériau de dessus (130') comprennent une couche de dessus.

15. Feuille pour carte selon la revendication 10, dans laquelle une ou les deux de la couche de matériau de dessus (130) et de la deuxième couche de matériau de dessus (130') comprennent une couche photo-réceptive.

16. Feuille pour carte selon la revendication 1, où la carte pour feuille peut être écrite avec un instrument pour écrire.

17. Feuille pour carte selon la revendication 1, dans laquelle la couche de polymère durci par un faisceau électronique (134) possède des propriétés d'allongement à la rupture et de contrainte à la rupture de sorte que, après que la feuille a été passée à travers une imprimante ou un copieur et qu'une opération d'impression a été menée sur la surface imprimable, la feuille se déchire instantanément le long des lignes découpées à l'emporte-pièce (102) lorsque la feuille est pliée sur les lignes affaiblies (102) pour former des feuilles subdivisées imprimées individuelles.

18. Feuille pour carte selon la revendication 1, dans laquelle la composition de pré-polymère durcissable par un faisceau électronique possède une viscosité efficace pour permettre à la composition de pré-polymère de diffuser dans la couche de matériau de dessus (130) à la profondeur qui rend la couche de matériau de dessus (130) déchirable proprement le long des lignes affaiblies (102).

19. Feuille pour carte selon la revendication 1, dans laquelle la composition de pré-polymère durcissable par un faisceau électronique possède une viscosité à 25°C d'environ 0,2 à environ 1000 mPa.s.

20. Procédé pour la fabrication d'une feuille pour carte, comprenant:
la fourniture d'une couche de matériau de dessus présentant une face avant et une face arrière;
la découpe partielle à travers la couche de matériau de dessus pour former des lignes affaiblies définissant des feuilles subdivisées sur la feuille pour carte;
l'application d'une composition de pré-polymère durcissable par un faisceau électronique sur la face arrière de la couche de matériau de dessus, la composition possédant une viscosité efficace pour permettre à au moins une portion de la composition de pré-polymère de diffuser dans la face arrière de la couche de matériau de dessus à une profondeur au niveau ou près des lignes affaiblies; et
le durcissement par un faisceau électronique du pré-polymère.

21. Procédé selon la revendication 20, comprenant en outre une étape de déchirure d'une ou de plusieurs des feuilles subdivisées à partir de la feuille pour carte.

22. Procédé selon la revendication 20, dans lequel la couche de matériau de dessus est imprimable.

23. Procédé selon la revendication 20, dans lequel la couche de matériau de dessus est un stock de carte.

24. Procédé selon la revendication 20, dans lequel la couche de matériau de dessus possède une surface photo-réceptive.

25. Procédé selon la revendication 20, dans lequel la couche de matériau de dessus est revêtue sur le dessus.

26. Procédé selon la revendication 20, dans lequel la découpe ne pénètre pas à travers le pré-polymère durcissable ou le polymère durci par un faisceau électronique diffusé.

27. Procédé selon la revendication 20, dans lequel la découpe comprend au moins une parmi une découpe à l'emporte-pièce ou un poinçonnage.

28. Procédé selon la revendication 20, dans lequel l'application inclut le revêtement d'une solution de la composition de pré-polymère durcissable par un faisceau électronique sur la face arrière de la couche de matériau de dessus et le chauffage de la solution revêtue pour retirer le diluant.

29. Procédé selon la revendication 20, dans lequel la composition de pré-polymère durcissable par un faisceau électronique comprend un diluant réactif.

30. Procédé selon la revendication 20, dans lequel l'application inclut le revêtement de la composition de pré-polymère sur la face arrière et le durcissement du pré-polymère avant la découpe.

31. Procédé selon la revendication 20, dans lequel un deuxième mélange de pré-polymère durcissable est revêtu sur la face arrière de la couche de pré-polymère durcissable par un faisceau électronique (134) et par la suite les deux pré-polymères durcissables sont durcis, dans lequel le durcissement comprend (a) un durcissement par irradiation du deuxième mélange de pré-polymère avec une lumière UV, (b) un durcissement thermique, (c) un durcissement par un faisceau électronique ou une combinaison de deux de (a)-(c) ou plus.

32. Procédé selon la revendication 31, dans lequel le deuxième mélange de pré-polymère durcissable comprend un photo-initiateur, un initiateur thermique ou une combinaison de ceux-ci.

33. Procédé selon la revendication 31, dans lequel (c) est réalisé accompagné du durcissement du pré-polymère durcissable par un faisceau électronique.

34. Procédé selon la revendication 20, dans lequel la composition de pré-polymère durcissable par un faisceau électronique comprend un monomère, un oligomère et/ou un polymère réticulable qui peut être polymérisé et/ou réticulé par l'application d'un faisceau électronique sur celui-ci.

35. Procédé selon la revendication 20, dans lequel les lignes affaiblies sont formées dans la couche de matériau de dessus (a) avant l'application de la composition de pré-polymère durcissable par un faisceau électronique sur celle-ci, (b) à la suite de l'application de la composition de pré-polymère durcissable par un faisceau électronique sur celle-ci ou (c) à la suite du durcissement de la composition de pré-polymère durcissable par un faisceau électronique.
